# FASCICULE DE BREVET EUROPEEN

(11) **EP 0 418 170 B1**
(45) Date de publication et mention de la délivrance du brevet: **01.06.1994**
(21) Numéro de dépôt: 90402550.9
(22) Date de dépôt: 14.09.1990
(51) Int. Cl.: B23K 26/14

(54) **Appareil et procédé de soudage de pièces métalliques par faisceau laser**
Gerät und Verfahren zum Schweissen von Werkstücken mittels eines Laserstrahls
Apparatus and process for welding work-pieces by means of a laser beam

(30) Priorité: 15.09.1989 FR 8912143
(43) Date de publication de la demande: 20.03.1991
(73) Titulaire: ELECTRICITE DE FRANCE Service National, 75008 Paris (FR); BUREAU D'ETUDES LABORATOIRE EUROPEEN DES TECHNIQUES AVANCEES (BELETA), F-91430 Igny (FR)
(72) Inventeur: Druelle, Philippe, F-93460 Gournay-Sur-Marne (FR); Merard, René, F-91430 Igny (FR)
(74) Mandataire: Desaix, Anne

(56) Documents cités:
- EP-A- 0 300 458
- DE-A- 3 036 427
- US-A- 3 843 865

## Description

La présente invention concerne un appareil de soudage par faisceau laser de deux pièces métalliques entre elles, comportant une fibre optique de transmission du faisceau laser de soudage et une tête de soudage comprenant des moyens de focalisation du faisceau laser issu de la fibre optique.

Elle concerne également un procédé de soudage par faisceau laser d'un manchon tubulaire métallique à l'intérieur d'un tube métallique de faible diamètre interne, par exemple de diamètre interne compris entre de l'ordre de 10 mm et de l'ordre de 50 mm.

Elle trouve une application particulièrement importante bien que non exclusive dans le domaine de la réparation d'un tube fuitard d'échangeur de chaleur du type échangeur à plaque tubulaire, notamment au niveau de la plaque tubulaire, l'échange de chaleur s'effectuant entre le réfrigérant primaire d'un réacteur tel qu'un réacteur nucléaire à eau sous pression ou REP, et l'eau en phases liquide et vapeur constituant le réfrigérant secondaire.

Il importe de pouvoir réparer les tubes fuitards pour éviter toute contamination par le circuit primaire éventuellement chargé en éléments radioactifs, du circuit secondaire qui doit impérativement rester inactif.

La réparation d'un tube fuitard, en général endommagé ou fissuré au niveau de ses points de fixation avec la plaque tubulaire, est difficile à effectuer; le diamètre interne d'un tube d'échangeur à plaque tubulaire appartenant au circuit de refroidissement d'un réacteur nucléaire, est en effet de l'ordre de 20 mm.

Les appareils de soudage de l'art antérieur présentent des inconvénients. Ils sont trop encombrants, et/ou nécessitent une grande consommation d'énergie et sont de ce fait à l'origine de déformations importantes au niveau de la plaque tubulaire et du tube muni de son manchon de réparation.

On connaît également (EP-A1-0 300 458) un dispositif conforme au préambule de la revendication 1. Il ne permet cependant pas d'éviter totalement les projections de métaux en fusion sur le miroir.

La solution en général retenue pour pallier les inconvénients des appareils de soudage connus, consiste donc à isoler le tube fuitard en l'obturant purement et simplement, plutôt que de chercher à le réparer. Cette solution n'est d'ailleurs pas non plus satisfaisante car elle présente l'inconvénient de réduire le nombre de tubes en service entre circuit primaire et circuit secondaire.

L'invention vise à fournir un appareil de soudage et un procédé de soudage d'un manchon à l'intérieur d'un tube de faible diamètre, répondant mieux que ceux antérieurement connus aux exigences de la pratique, notamment en ce que l'appareil de soudage, tout en présentant un faible encombrement et une excellente robustesse, permet de réaliser des soudures de bonne qualité, et en ce que le procédé de soudage est rapide, facile à mettre en oeuvre, et nécessite une moins grande consommation d'énergie que les procédés de l'art antérieur.

Dans ce but l'invention propose essentiellement un appareil de soudage conforme à la revendication 1.

L'utilisation d'un faisceau laser pour effectuer des soudures par faisceau dévié par exemple par transparence ou pointage dans des tubes de petits diamètres, et nécessitant une tête de soudage présentant des moyens de déflexion du faisceau vers les pièces à souder pose des problèmes du fait de l'émission de vapeurs métalliques recouvrant instantanément les moyens de déflexion lors du soudage par faisceau laser et empêchant alors la poursuite du soudage.

La présente invention permet d'éliminer cet inconvénient.

Dans des modes de réalisation avantageux de l'invention, on a recours, en outre, à l'une et/ou à l'autre des dispositions suivantes :
- le gaz de balayage est un gaz neutre, et avantageusement de l'argon;
- la plus petite distance séparant les moyens de déflexion du point de focalisation est inférieure à de l'ordre de 30 mm et avantageusement comprise entre de l'ordre de 5 mm et 10 mm.
- l'extrémité de la fibre optique dont est issu le faisceau laser est fixée dans l'axe de la tête de soudage, et les moyens de focalisation comprennent des moyens optiques de déviation du faisceau par rapport à l'axe de la tête de soudage pour diriger le faisceau sur le miroir de renvoi;
- les moyens de focalisation comprennent, disposés successivement sur le chemin optique du faisceau issu de la fibre, un ménisque, une lentille plan convexe et les moyens optiques de déviation du faisceau, lesdits moyens optiques de déviation étant constitués par une lentille dissymétrique formée par une portion cylindrique issue de la trépanation ou "carottage" cylindrique, d'une lentille plan convexe sphérique au voisinage de l'axe de ladite lentille sphérique, le carottage cylindrique étant d'axe parallèle à ladite lentille plan convexe sphérique. L'usage de cette lentille dissymétrique permet d'augmenter l'espace entre le déflecteur et le point à souder pour mieux s'affranchir des projections de vapeurs métalliques lors du soudage. L'ensemble des optiques est avantageusement traité "anti-reflets" à la longueur d'onde du laser.
- les moyens de balayage par un gaz, comprennent des déflecteurs constitués par des parois disposées symétriquement par rapport à un plan passant par l'axe de la tête de soudage et agencés pour accélérer la vitesse du gaz dans la zone de dégagement et augmenter la pression dynamique qui s'exerce sur la zone de soudage;
- l'appareil comporte de plus des moyens de commande et de contrôle du soudage par laser en régime d'émission impulsionnel de ce dernier pendant des temps d'émission successifs de durée comprise entre de l'ordre de 10 millisecondes et de l'ordre de 50 millisecondes;
- le faisceau laser utilisé est un faisceau émis par laser à corps solide du type laser YAG;
- l'appareil comporte de plus des moyens de rotation automatique de la tête de soudage autour de son axe et des moyens de déplacement automatique de ladite tête de soudage le long de son axe, agencés pour déplacer ladite tête longitudinalement par rapport aux pièces à souder;

Avantageusement, la fibre optique principale est accompagnée d'une autre fibre optique qui est utilisée pour contrôler la puissance du faisceau laser YAG au niveau de la première lentille, ce qui a pour effet de connaître l'état de la fibre principale (cas de rupture).

Elle permet, en outre, de connaître la forme de l'impulsion laser.

Elle permet aussi l'évaluation en temps réel de l'état de la soudure par l'étude du jet de gaz incandescent éjecté lors de la soudure;
- Un cordon ombilical fait la liaison entre le laser YAG et la tête d'usinage. Ce cordon étanche véhicule le gaz de couverture et contient les deux fibres optiques. Ce gaz est utilisé comme gaz de chasse ou de balayage au niveau de la base et sert conjointement à refroidir la fibre véhiculant l'énergie du faisceau laser.

L'invention propose également un procédé de soudage par faisceau laser d'un manchon tubulaire métallique à l'intérieur d'un tube métallique de diamètre interne inférieur à 50 mm, caractérisé en ce que :
- on introduit le manchon à souder dans le tube avec lequel il est rendu coopèrant jointivement, (le manchon introduit est avantageusement fixé au tube par exemple par dudgeonnage ou par expansion ou sertissage hydraulique),
- on introduit une tête de soudage de forme allongée autour d'un axe dans le tube jusqu'à une position déterminée de la tête par rapport au manchon à souder,
- on émet un faisceau de rayonnement laser dans un système à fibre optique connectée à la tête de soudage en focalisant le faisceau de rayonnement laser issu de la fibre optique sur la portion de manchon à souder par l'intermédiaire de moyens de déflexion fixés rigidement à la tête, ce qui entraîne le soudage du manchon au tube par fusion du métal, et
- on balaye simultanément à l'émission du faisceau laser la zone de soudage par un gaz de balayage injecté à l'intérieur de la tête de soudage et dirigé entre les moyens de déflexion et ladite zone de soudage, pour entraîner les vapeurs métalliques issues de ladite fusion du métal en dehors du champ des moyens de déflexion.

Dans un mode de réalisation avantageux de l'invention, le procédé de soudage est de plus caractérisé en ce qu'on fait tourner la tête de soudage autour de son axe pour réaliser une soudure circulaire continue ou discontinue du manchon sur la paroi interne du tube, l'émission laser étant effectuée en régime pulsé, et on aspire simultanément au vide l'intérieur du tube par l'extrémité du tube opposé à l'extrémité par laquelle a été introduite la tête de soudage, afin de favoriser l'évacuation du gaz neutre de balayage injecté à l'intérieur de ladite tête.

L'émission laser peut cependant être également effectuée en régime modulé ou continu.

L'invention sera mieux comprise à la lecture de la description qui suit, des modes de réalisation particuliers donnés à titre d'exemples non limitatifs.

La description se réfère aux dessins qui l'accompagnent dans lesquels :
- la figure 1 est un schéma de principe d'un appareil de soudage selon un mode de réalisation de l'invention, appliqué à la réparation d'un tube d'échangeur de chaleur,
- la figure 2 est une coupe axiale schématique à grande échelle de la tête de soudage de l'appareil de la figure 1,
- la figure 3 est un schéma de principe d'une partie du système optique de l'appareil de la figure 1,
- les figures 4a et 4b, montrent une variante de réalisation, respectivement de face et en coupe d'une lentille constituant les moyens de déviation du faisceau appartenant aux moyens de focalisation de l'appareil selon l'invention,
- la figure 5 est une vue schématique avec coupe partielle montrant une partie de la tête de soudage de l'appareil selon un mode de réalisation de l'invention avec déflecteurs latéraux,
- la figure 6 est une coupe schématique selon VI-VI en vue de dessus de la figure 5,
- la figure 7 est une coupe verticale partielle selon VII-VII de la figure 2,
- la figure 8 est une coupe axiale schématique, à grande échelle, de l'extrémité de la tête de soudage selon un autre mode de réalisation de l'invention,
- la figure 9 est une vue schématique, en perspective, d'un mode de réalisation de moyens auto-centreur de la tête dans le tube et le manchon, utilisables dans l'invention,
- la figure 10 est une vue, en coupe, d'un autre mode de réalisation des moyens de fixation et de by-pass des lentilles de la tête de soudage de la figure 2,
- la figure 11 est une vue en coupe suivant XI-XI de la figure 10.

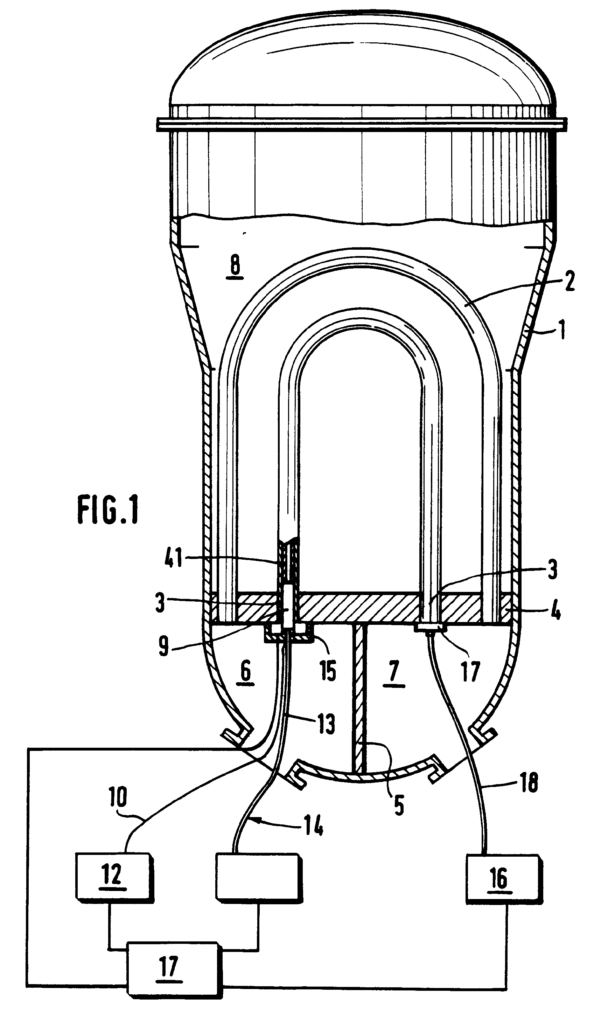

L'échangeur de chaleur montré schématiquement en figure 1 est d'un type couramment utilisé dans les réacteurs à eau sous pression. Il comporte une enveloppe 1 qui contient un faisceau de tubes en U 2, dont les parties terminales 3 traversent une plaque tubulaire 4. Le diamètre d'un tube 2 a été exagéré sur la figure 1, en proportion par rapport à l'enveloppe 1 et à la plaque 4. La plaque 4 délimite avec un cloison 5 une boite à eau froide 6 et une boite à eau chaude 7, munies respectivement d'une conduite de départ et d'une conduite d'arrivée du réfrigérant primaire du réacteur (non représentées). La partie du circuit primaire contenue dans l'échangeur est isolée et vidangée de façon connue en soi.

La partie 8 de l'échangeur comprise entre les tubes 2 et l'enveloppe 1 est occupée, lors du fonctionnement, par le réfrigérant secondaire du réacteur et appartient donc au circuit secondaire.

L'appareil selon le mode de réalisation de l'invention plus particulièrement décrit ici, comprend une tête de soudage 9 allongée autour d'un axe, (par exemple cylindrique), connectée à une de ses extrémités, à une fibre optique 10 de transmission du faisceau laser. La fibre optique de transmission est, de préférence, une monofibre en silice de diamètre compris entre 500 et 1500 µm. Mais d'autres types de fibres, par exemple constituées par plusieurs fibres (multifibres) sont également utilisables. La fibre est connectée à son autre extrémité à une source 12 de rayonnement cohérent émis par laser, de type connue en elle-même.

Avantageusement, le laser est un laser solide du type connu sous la dénomination YAG (longueur d'onde de l'ordre du micron) comprenant des ions de Nd.

La densité de puissance mise en oeuvre avec une source laser dans un appareil selon l'invention est comprise entre 0,1 et 5 MW par cm², avantageusement de l'ordre de 0,3 MW/cm².

La tête de soudage 9 est, par ailleurs, raccordée par l'intermédiaire d'un flexible 13 à un dispositif 14 d'alimentation en gaz de balayage, par exemple de l'Argon, comprenant un réservoir d'Argon sous pression et des moyens de régulation du débit de gaz injecté dans la tête de soudage 9 par le flexible 13.

L'appareil de soudage comprend des moyens de rotation automatique de la tête de soudage autour de son axe, et des moyens de déplacement longitudinaux automatique de ladite tête de soudage, le long de son axe.

Les moyens de rotation (non représentés) sont externes à la tête de soudage. Ils sont disposés à l'extérieur du tube à réparer et sont constitués de façon connue par exemple par deux pignons, l'un étant solidaire de la tête et l'autre d'un support 15, engrenant l'un avec l'autre autour de deux axes parallèles et actionnés par un moteur pas à pas à commande numérique, par exemple fixé audit support. Les moyens de déplacement longitudinaux (également non représentés) sont de type connu et comprennent par exemple une vis sans fin solidaire de la tête de soudage coopérant avec un écrou fixé au support 15 et actionné par un moteur pas à pas.

Le support 15 est, par exemple, un engin utilisé couramment lors des opérations de contrôle et de maintenance d'un réacteur nucléaire, sur lequel la tête de soudage et ses moyens de rotation et de déplacement sont aisément adaptables. L'engin est avantageusement de type souvent dénommé "araignée". On trouvera des constitutions possibles d'araignées en se reportant notamment aux documents US-A-4018345 (COMBUSTION ENGINEERING) et FR A-2.309.314 (FRAMATOME).

Des moyens 16 de mise sous vide de l'intérieur du tube 2 sont prévus. Ils comprennent une tête 17 étanche venant se fixer sur l'extrémité opposée 3 du tube, par rapport à l'extrémité du tube dans laquelle la tête de soudage 9 est introduite. Un flexible 18 relie la tête 17 au moyen de mise sous vide 16 comprenant par exemple une pompe à vide.

Les moyens de rotation et de déplacement de la tête 9, la source laser 12, les dispositifs d'alimentation 14 et de mise sous vide 16, sont commandés par des moyens de commande et de contrôle 17. Les moyens 17 comprennent par exemple un automate programmable et permettent le fonctionnement de l'appareil comme il sera décrit ci-après.

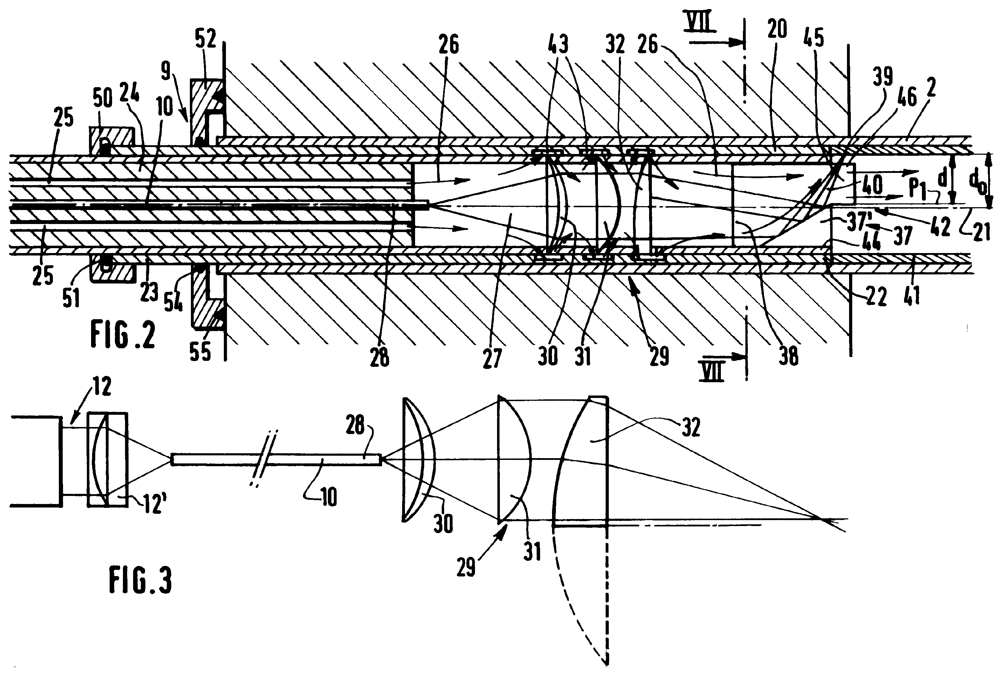

La figure 2 est une coupe axiale de la tête de soudage 9 de l'appareil selon l'invention plus particulièrement décrit ici.

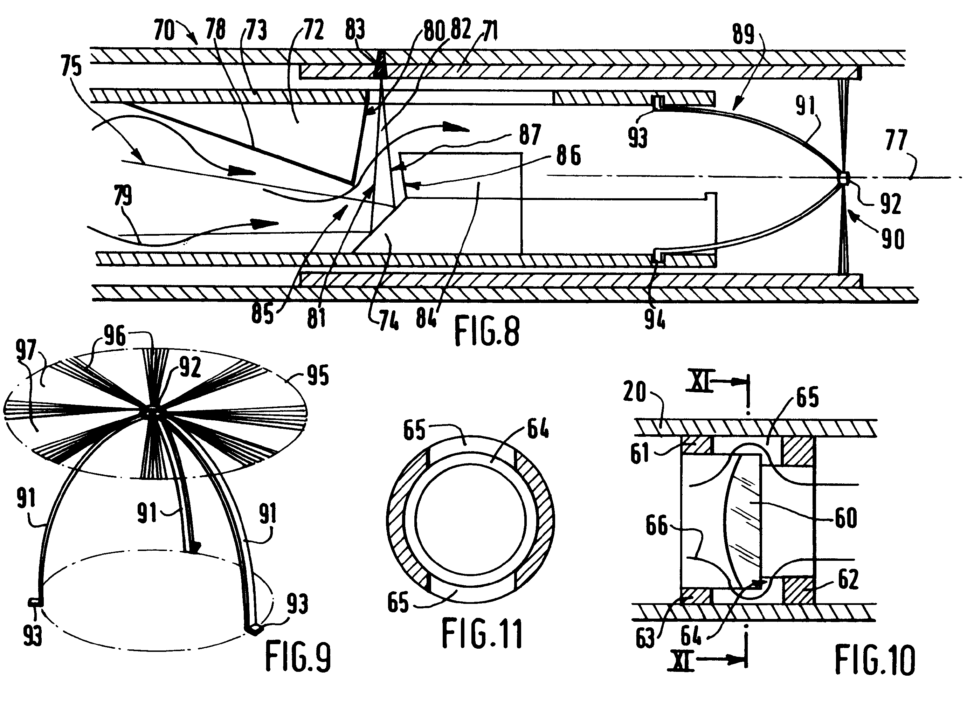

La tête 9 comprend une enveloppe cylindrique 20 en métal, par exemple en acier inoxydable, autour d'un axe 21; le diamètre externe de l'enveloppe est par exemple de l'ordre de 19 mm. L'enveloppe est de ce fait, propre à coopérer avec l'alésage interne du tube 2 de l'échangeur, de diamètre interne de l'ordre de 20 mm, ce qui permet l'auto-centrage de la tête dans le tube. Des moyens d'auto-centrage spécifiques de type connus, ou tels qu'ils vont être décrits par la suite en référence aux figures 8 et 9, peuvent également être prévus. L'enveloppe 20 est ouverte à une de ses extrémités 22 et est munie à l'autre extrémité 23 d'un bouchon métallique 24 percé de part en part par des passages 25 d'amenée du gaz de balayage, dont le trajet est représenté sur la figure 2 par des flèches 26 à l'intérieur de la tête de soudage.

Les passages 25 sont avantageusement disposés symétriquement par rapport à l'axe 21 et sont, par exemple, au nombre de 6 ou 8.

La tête de soudage 9 est connectée à la fibre optique 10 de transmission du faisceau laser 27 par son extrémité 28, fixée au bouchon 24 dans l'axe 21 de la tête de soudage.

Comme montré sur les figures 2 et 3, la tête de soudage comprend des moyens de focalisation 29 du faisceau 27, par exemple constitués par un ménisque sphérique 30, une lentille plan convexe sphérique 31 et des moyens optiques de déviation 32 du faisceau constitués par une demi lentille plan convexe sphérique issue de la trépanation, par évidemment cylindrique, d'une lentille plan convexe de grand diamètre (en trait interrompu sur la figure 3).

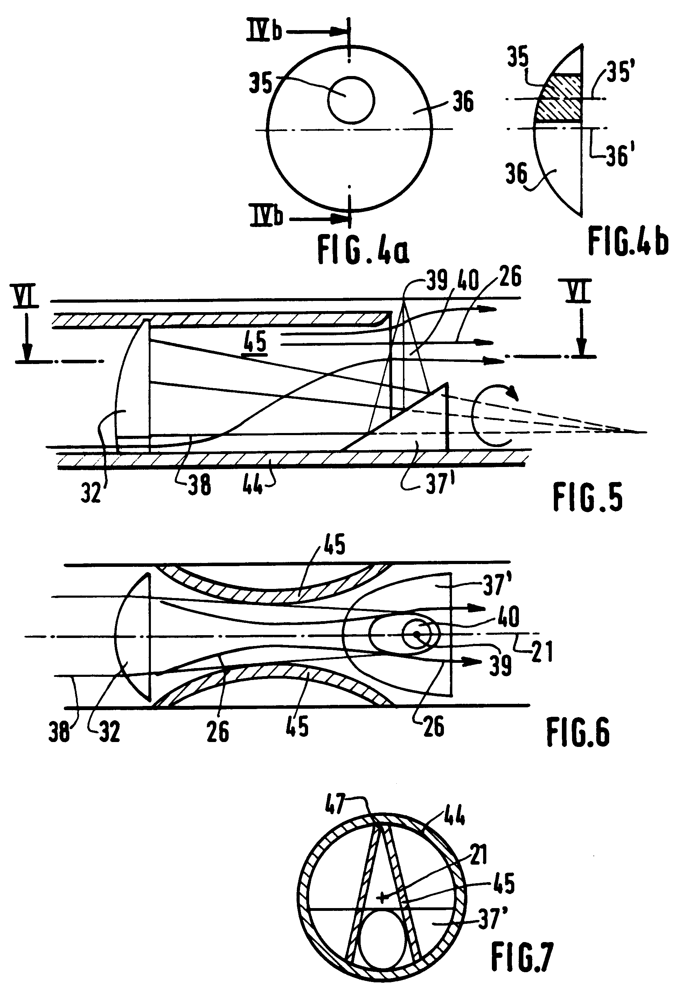

Plus précisémment, les figures 4a et 4b montrent un mode de réalisation des moyens de déviation 32 constitués par une lentille 35 d'axe 35′, issue du "carottage" cylindrique ou "trépanation" d'une lentille plan convexe sphérique 36, d'axe 36′, l'axe 35′ étant parallèle à l'axe 36′ de la lentille 36.

Les moyens de déflexion 37 (voir figure 2) sont constitués par un miroir plan 37′ disposé dans un plan perpendiculaire au faisceau et incliné d'un angle compris entre 20 et 60° par rapport à l'axe 21.

Le miroir 37′ dévie le faisceau 38 et focalise le faisceau dévié 40 au point de focalisation 39 sur les pièces à souder constituées dans l'exemple d'application décrit ici, par le tube d'échangeur 2 et un manchon cylindrique 41 coopérant jointivement avec la paroi interne du tube dans lequel il a été préalablement introduit et auquel il est fixé par exemple par dudgeonnage, ou par expansion ou sertissage hydraulique. Les angles de déflexion des rayons du faisceau laser, entre rayons incidents et rayons réfléchis correspondants, sont avantageusement compris entre 80° et 100°. Ils sont déterminés en fonction de l'inclinaison du miroir par rapport à l'axe 21 et de la distance existant entre miroir et point de focalisation.

Le faisceau dévié 40 constitue un cone dont le sommet est le point de focalisation 39. Les moyens de déviation 32 et le miroir 37′ sont, par exemple, agencés pour que l'axe du cone du faisceau 40 forme un angle d'incidence compris entre de l'ordre de 30 et 0° (incidence normale) avec le plan tangent aux pièces à souder, ce qui favorise une bonne pénétration de la soudure.

Selon l'invention, la tête de soudage 9 comprend une zone de dégagement 42 séparant le miroir 37′ du point de focalisation 39 du faisceau.

Cette zone de dégagement 42 interne ou, ce qui est considéré comme équivalent, partiellement interne à la tête de soudage, suivant que l'enveloppe 20 se referme plus ou moins au-dessus du miroir 37′, présente une section minimum prédéterminée de passage du gaz émis par les moyens de balayage 14. Cette section minimum est avantageusement supérieure ou égale à la demi section interne du cylindre 20, ce qui est réalisé lorsque le miroir de renvoi du faisceau est entièrement situé, par rapport au point de focalisation, à une distance sensiblement égale, ou supérieure, à la distance dₒ séparant l'axe 21 de la tête de soudage du point 39 de focalisation. Avantageusement, la distance d du plan P₁ parallèle à l'axe 21 et tangeant à l'arête supérieure du miroir 37′, ou plus généralement contenant le point des moyens de déflexion le plus proche du point de focalisation 39, est prévue sensiblement égale ou supérieure à dₒ.

Dans l'appareil de soudage selon l'invention plus spécialement décrit ici, la distance d₀ est de l'ordre de 10 mm.

Pour permettre l'accès à la zone 42 située à proximité d'une extrémité de la tête 9, du gaz injecté dans la tête par les passages 25 disposés à l'autre extrémité, les moyens 14 de balayage comprennent des moyens de by-pass 43 du gaz autour des moyens de focalisation 29. Ces moyens de by-pass sont par exemple constitués en partie par des gorges circulaires évidées dans la face interne du cylindre enveloppe 20 de la tête de soudage.

Une seconde enveloppe cylindrique 44 de fixation des moyens de focalisation 29 et de déflexion 37 est, par ailleurs, prévue. Celle-ci est réalisée de façon à permettre le passage du gaz de balayage et coopère jointivement avec l'enveloppe 20 dans laquelle elle peut tourner avec un frottement réduit. Des trous 45 dans l'enveloppe 44 au droit des gorges 43 constituent une deuxième partie des moyens de by-pass. Le gaz suit le trajet indiqué par les flèches référencés 26 sur la figure 2.

D'autres modes de réalisation de ces moyens de fixation et de by-pass des lentilles sont également possibles. Par exemple, comme montré sur les figures 10 et 11, la lentille 60 est fixée dans une pièce 61 cylindrique coopérant avec l'alésage interne du cylindre enveloppe 20 dans lequel elle est fixée.

Cette pièce 61 de diamètre externe de l'ordre de 16mm par exemple, comprend une première partie 62 munie d'un premier diamètre interne, et une deuxième partie 63 munie d'un deuxième diamètre interne supérieur au premier, ce qui crée un épaulement circulaire 64 sur lequel est appuyée et fixée la lentille 60. Deux trous cylindriques 65, par exemple de 8mm de diamètre sont percés transversalement et perpendiculairement à l'axe de la pièce 61, et constituent les moyens de by-pass des gaz 66, comme montré sur la figure 10. Une telle disposition autorise une large section de passage pour les gaz autour des lentilles, favorisant leur refroidissement et limitant les pertes de charge.

Enfin, les moyens de balayage de la tête de soudage 9 comportent des déflecteurs 45 constitués par des parois planes disposées symétriquement par rapport à un plan passant par l'axe de la tête de soudage et fixées l'une à l'autre par une arête longitudinale 47 pour constituer une cornière en V dont les surfaces internes sont avantageusement tangentes au faisceau 38 issu des moyens de focalisation, comme représenté sur les figures 2 et 7. Une ouverture 46 est ménagée dans l'arête 47 pour laisser passer le faisceau laser vers les pièces à souder.

Un autre mode de réalisation des déflecteurs est représenté sur les figures 5 et 6. Les déflecteurs sont formés par des parois courbes symétriques par rapport à un plan passant par l'axe 21 et constituent de la sorte un étranglement formant Venturi pour canaliser et accélérer le gaz vers le point 39 de focalisation et de soudage.

Comme déjà mentionné, l'appareil de soudage (voir figure 2) comprend des moyens de rotation automatique externes à la tête (non représentés) autour de l'axe 21 de la tête de soudage. Ces moyens sont agencés pour permettre la rotation du cylindre 44 et simultanément des différentes parties de la tête qui y sont fixées, à savoir le bouchon 24, les moyens de focalisation 29, le miroir 37 et les déflecteurs 45, à l'intérieur de l'enveloppe cylindrique 20 de la tête de soudage. Un dispositif annulaire 50 fixé à l'enveloppe 20 et comportant un joint d'étanchéïté 51 de type connu (joint torique par exemple) assure l'étanchéité avec l'enveloppe lors de la rotation, de façon à éviter les fuites du gaz injecté sous pression dans la tête 9 par les passages 25.

De même, des moyens de déplacement longitudinaux automatiques sont prévus. Ils permettent le déplacement longitudinal de la tête dans le tube à réparer. Ils comprennent une pièce d'étanchéïté 52 sensiblement en forme de cloche dont la base est munie d'un joint 53 d'étanchéïté avec la plaque tubulaire 4. La cloche est traversée de part en part par l'enveloppe tubulaire 20 de la tête . La cloche et l'enveloppe sont déplaçables l'une par rapport à l'autre. Elles coopèrent jointivement par l'intermédiaire du joint d'étanchéïté torique 54. La cloche est maintenue en pression sur la plaque tubulaire 4 par des moyens connus en soi.(non représentés).

On a représenté sur la figure 8 un autre mode de réalisation de l'extrémité de la tête de soudage selon l'invention montrant une attaque des gaz de balayage améliorée, à proximité du point de focalisation.

L'extrémité 70 de la tête est de diamètre externe inférieur au diamètre interne du manchon 71 dans lequel elle est introduite.

Un talon 72 est fixé sur l'enveloppe cylindrique 73 de la tête, en amont du miroir 74 par rapport au trajet du faisceau 75. Le miroir 74 est situé entièrement en dessous du plan axial 77 de la tête, par rapport au point de focalisation.

Le talon 72 présente une face plane d'attaque 78 par les gaz 79, inclinée vers le miroir, par exemple faisant un angle de 60° avec le plan du miroir.

Le talon 72 présente également une face arrière 80 incurvée, en forme de portion de surface conique ou en forme de plan, de direction sensiblement parallèle à la plus proche génératrice 81, du faisceau laser conique 82 focalisé en 83.

Le miroir est surmonté d'un second talon 84, de canalisation des gaz, formant une chicane 85 entre la face arrière 80 du talon 72 et la face avant 86 du talon 84. Cette face avant est, par exemple, plane ou en portion de cône, et est de direction sensiblement parallèle à la génératrice 87 la plus proche, du faisceau laser 82.

Les hauteurs respectives du miroir 74, du talon 84 et de la zone de balayage supérieure 88, sont par exemple et avantageusement, sensiblement égales entre elles, par exemple égale chacune au tiers du diamètre interne de la tête de soudage. Un tel montage en chicane permet de prolonger l'action dynamique du gaz de balayage tout en chassant les poussières dues au soudage vers l'aval et dans le prolongement de la tête de soudage. Dans les modes de réalisation plus particulièrement décrits ici, celle-ci est entièrement ouverte à son extrémité terminale 89.

A cette extrémité sont, par exemple, fixés des moyens auto-centreurs 90, du type décrits ci-après en référence aux figures 8 et 9.

Ces moyens comportent, par exemple, trois lames métalliques flexibles 91 de 2mm de large et de 5cm de longueur, qui peuvent encore être des joncs cylindriques, fixés entre eux à l'une de leurs extrémités 92 pour former un trépied. Chaque lame est terminée par une extrémité 93 repliée vers l'extérieur à 90°, et propre à s'enclencher dans un trou 94 percé à cet effet dans l'extrémité terminale 89, en compression latérale.

L'extrémité commune 92 comprend une roue 95, formant brosse circulaire, comportant des poils (ou pailles) métalliques 96 radiaux, flexibles, le diamètre de la roue étant légèrement supérieur, par exemple de quelques dizièmes de millimètre, au diamètre interne du manchon 71. Les poils 96 sont clairsemés, ou disposés par paquets séparés entre eux par des espaces vides 97, pour permettre un bon écoulement des gaz au travers de la brosse et minimiser les pertes de charge. Par exemple, dans un manchon de diamètre interne 16mm, le diamètre de la roue, d'extrémité de poil métallique à extrémité de poil métallique, est de 16mm et 3 dizième de millimètre, les poils étant répartis en 8 paquets d'une dizaine de poils flexibles métalliques de 3 à 4 dizièmes de millimètre de diamètre chacun.

On va maintenant décrire le fonctionnement de l'appareil de soudage selon l'invention, appliqué à la réparation d'un tube de faible diamètre et plus particulièrement à la réparation d'un tube d'échangeur de chaleur de réacteur nucléaire.

Le tube à réparer est tout d'abord identifié, le manchon 41 de réparation à souder est ensuite introduit à un emplacement préalablement déterminé à l'intérieur du tube, par exemple à proximité de la plaque tubulaire. On met alors en place l'araignée 15 porteuse de la tête de soudage 9, dans la boite 6, face au tube à réparer. La tête de soudage 9 est ensuite introduite dans le tube 2 jusque dans une position déterminée par rapport au manchon à souder, par exemple en butée contre celui-ci comme représenté sur la figure 2. Cette opération est effectuée à distance et commandée par les moyens 17.

Par ailleurs, on aspire à l'intérieur du tube par l'intermédiaire des moyens de mise sous vide 16, la tête étanche 17 ayant été fixée au préalable sur l'autre extrémité du tube 2 à réparer, dans la boite 7.

On injecte ensuite, sous une pression de quelques bar, par exemple 10 bar, un gaz de balayage par exemple un gaz neutre connu de l'argon ou de l'azote, dans la tête de soudage; le gaz pénètre dans la tête via les passages 25, suit le trajet représenté par les flèches 26 sur les figures 2, 5 et 6 et vient balayer sous pression, (la pression d'injection moins les pertes de charge), la zone de dégagement 42. Les déflecteurs 45 accélèrent le gaz dans la zone 42 et orientent sa trajectoire sur le point de focalisation 39. L'évacuation du gaz de balayage est facilitée par l'aspiration de l'intérieur du tube 2, en aval de la tête de soudage, grâce aux moyens de mise sous vide 16.

Le circuit de gaz ayant été mis en service, on émet un faisceau de rayonnement cohérent à partir de la source laser 12 du type laser Nd⁺ : YAG, de puissance de l'ordre de quelques centaines de Watt. L'émission est de préférence effectuée en régime impulsionnel, les temps d'émission des impulsions variant avantageusement de 5 à 100 ms, par exemple 20 ms, pour une énergie de 10 à 50 J, à une cadence de 1 à 10 "coups" par seconde, par exemple 6 coups par seconde.

Le faisceau laser émis par la source est condensé de façon connue en soi par un condenseur 12′ (figure 3), transmis par la fibre optique 28, focalisé par les moyens 29 puis dévié en 37 pour être dirigé et focaliser sous forte incidence (proche de la normale) sur le manchon 41 que l'on vient ainsi souder par fusion sur le tube 2. Le diamètre du point de focalisation obtenu avec le dispositif de l'invention est réduit, par exemple de l'ordre de 500 microns, et une bonne pénétration de soudure (par exemple de 1,5 mm) est atteinte.

Lors du soudage, il y a émission de vapeurs métalliques (vapeur et gouttes liquides) en direction du miroir 37. Le balayage par un gaz de la zone de dégagement 42 par exemple de section minimale supérieure ou égale à la moitié de la section de la tête de soudage, section minimale par exemple de l'ordre de 100mm², l'extrémité de la tête de soudage étant ouverte sur une partie importante de sa surface, permet de chasser les vapeurs métalliques en dehors du champ du miroir vers l'aval du tube et dans le prolongement de la tête de soudage et d'éviter ainsi la pollution du miroir, autrement instantanément recouvert par les vapeurs métalliques recondensées. La pression dynamique qui s'exerce sur le point de soudage limite, par ailleurs, la formation même de vapeurs métalliques.

On effectue ensuite une rotation de la partie supérieure de la tête autour de son axe pour souder en transparence de façon continue ou discontinue, le manchon au tube qui la contient.

Toutes ces opérations ont été avantageusement programmées et commandées par les moyens de commande 17. Elles sont, par exemple, effectuées soit en mode automatique, soit en mode semi-automatique.

La présente invention englobe également le cas où :
- La partie arrière du miroir 37 présente une face en forme de cuvette profilée pour favoriser l'écoulement laminaire du gaz de balayage en aval de la zone 42.
- D'autres moyens de réalisation de by-pass, des moyens de focalisation, à l'intérieur de la tête de soudage, sont prévus pour le gaz de balayage. Ce peut être par exemple une canalisation traversant longitudinalement la tête de soudage pour injecter le gaz, directement dans la zone de balayage 42.

## Revendications

1. Appareil de soudage par faisceau laser d'un manchon tubulaire (41) métallique à l'intérieur d'un tube (2) métallique, ledit appareil comportant
- une fibre optique (10) de transmission du faisceau
- et une tête de soudage (9) comprenant un corps cylindrique (20) d'axe (21) sensiblement parallèle à la direction de l'axe du faisceau laser issu de la fibre optique, ladite tête de soudage étant propre à coopérer avec l'alésage interne dudit tube et comprenant
des moyens de focalisation (29) du faisceau issu de la fibre optique,
des moyens de déflexion (37) du faisceau issu des moyens de focalisation (29) pour focaliser le faisceau dévié sur la portion de manchon à souder,
lesdits moyens de déflexion (37) du faisceau comprenant un miroir plan (37') de renvoi du faisceau vers ladite portion,
une zone de dégagement interne (42) séparant le miroir de renvoi (37') et le point de focalisation (39) du faisceau,
et des moyens de balayage (14) par un gaz de balayage de cette zone de dégagement agencés pour chasser hors du champ des moyens de déflexion (37) les vapeurs métalliques issues de la fusion des métaux lors du soudage,
caractérisé en ce que le miroir de renvoi (37') du faisceau est entièrement situé, par rapport au point de focalisation (39), à une distance sensiblement égale ou supérieure à la distance d₀ séparant l'axe (21) de la tête de soudage dudit point de focalisation (39), et
en ce que le corps est entièrement ouvert à son extrémité terminale (22,89), les moyens de balayage étant agencés pour chasser lesdites vapeurs métalliques dans le prolongement de la tête de soudage.

2. Appareil de soudage selon la revendication 1, caractérisé en ce que la plus petite distance séparant les moyens de déflexion (37) du point de focalisation (39) est inférieure à 30 mm.

3. Appareil de soudage selon l'une quelconque des revendications 1 et 2, caractérisé en ce que l'extrémité de la fibre optique (28) dont est issu le faisceau laser est fixée dans l'axe (21) de la tête de soudage (9), et en ce que les moyens de focalisation (29) comprennent des moyens optiques (32) de déviation du faisceau par rapport à l'axe (21) de la tête de soudage, pour diriger ledit faisceau sur le miroir de renvoi (37′).

4. Appareil de soudage selon la revendication 3, caractérisé en ce que les moyens de focalisation (29) comprennent, disposés successivement sur le chemin optique du faisceau issu de la fibre, un ménisque (30), une lentille (31) plan convexe, et les moyens optiques (32) de déviation du faisceau, lesdits moyens optiques de déviation étant constitués par une portion de lentille plan convexe sphérique, obtenue par carottage cylindrique de ladite lentille sphérique, d'un axe parallèle à l'axe de ladite lentille sphérique.

5. Appareil de soudage selon l'une quelconque des revendications précédentes, caractérisé en ce que les moyens de balayage (14) par un gaz comprennent des déflecteurs (45) constitués par des parois disposées symétriquement par rapport à un plan passant par l'axe de la tête de soudage et agencés pour accélérer la vitesse du gaz dans la zone de dégagement et augmenter la pression dynamique qui s'exerce sur la zone de soudage.

6. Appareil de soudage selon l'une quelconque des revendications précédentes, caractérisé en ce que il comporte de plus des moyens de commande et de contrôle (17) du soudage par laser en régime d'émission impulsionnel de ce dernier pendant des temps d'émission successifs de durée comprise entre de l'ordre de 10 millisecondes et de l'ordre de 50 millisecondes.

7. Appareil de soudage selon l'une quelconque des revendications 1 à 6, caractérisé en ce que la source du faisceau laser utilisée est une source laser solide de type laser YAG.

8. Appareil de soudage selon l'une quelconque des revendications précédentes, caractérisé en ce que il comporte de plus des moyens de rotation automatique de la tête de soudage autour de son axe et des moyens de déplacement automatique de ladite tête de soudage le long de son axe, agencés pour déplacer longitudinalement ladite tête par rapport aux pièces à souder.

9. Appareil de soudage selon l'une quelconque des revendications précédentes, caractérisé en ce que le gaz de balayage est un gaz neutre.

10. Appareil de soudage selon l'une quelconque des revendications précédentes, caractérisé en ce que les moyens de balayages comportent des moyens de by-pass (43) constitués en partie par des gorges circulaires évidées dans la face interne du corps cylindrique autour des moyens de focalisation.

11. Appareil selon l'une quelconque des revendications précédentes, caractérisé en ce qu'il comporte une seconde fibre optique de contrôle de la puissance du faisceau laser.

12. Appareil selon l'une quelconque des revendications précédentes, caractérisé en ce qu'il comporte un cordon de protection de la fibre optique entre la source de rayonnement laser et la tête de soudage, ledit cordon véhiculant également le gaz de balayage qui sert ainsi conjointement à refroidir ladite fibre optique.

13. Appareil de soudage selon l'une quelconque des revendications précédentes, caractérisé en ce que les moyens de déflexion sont agencés pour renvoyer le faisceau focalisé vers les pièces à souder sous un angle d'incidence aigu inférieur à 30°, avec le plan tangent aux pièces à souder.

14. Procédé de soudage par faisceau laser d'un manchon tubulaire (41) métallique à l'intérieur d'un tube (2) métallique de diamètre interne inférieur à de l'ordre de 50 mm, dans lequel :
- on introduit le manchon (41) à souder dans le tube (2) avec lequel il coopère jointivement,
- on introduit une tête de soudage (9) de forme allongée autour d'un axe (21) dans le tube jusqu'à une position déterminée de la tête par rapport au manchon à souder,
- on émet un faisceau de rayonnement laser dans un système à fibre optique connecté à la tête de soudage en focalisant le faisceau de rayonnement laser issu de la fibre optique (10) sur la portion de manchon à souder par l'intermédiaire de moyens de déflexion (37) fixés rigidement à la tête, ce qui entraîne le soudage du manchon au tube par fusion du métal,
- on fait tourner la tête de soudage (9) autour de son axe pour réaliser une soudure circulaire continue ou discontinue du manchon (41), sur la paroi interne du tube, et
- on balaye simultanément à l'émission du faisceau laser la zone de soudage par un gaz de balayage injecté à l'intérieur de la tête de soudage et dirigé entre les moyens de déflexion (37) et ladite zone de soudage, pour entraîner les vapeurs métalliques issues de ladite fusion du métal en dehors du champ des moyens de déflexion,
caractérisé en ce que :
l'émission laser étant effectuée en régime pulsé, et le balayage s'effectuant dans le sens du prolongement de la tête de soudage ouverte à son extrémité,
on aspire simultanément au vide l'intérieur du tube par l'extrémité du tube opposé à l'extrémité par laquelle a été introduite la tête de soudage, afin de favoriser l'évacuation du gaz neutre de balayage injecté à l'intérieur de ladite tête.

## Patentansprüche

1. Gerät zum Schweißen einer rohrförmigen metallischen Hülse (41) im Inneren eines metallischen Rohrs (2) mit Hilfe eines Laserstrahls, wobei das Gerät enthält
- eine optische Faser (10) zur Übertragung des Strahls
- und einen Schweißkopf (9) mit einem zylindrischen Körper (20) mit einer zu der Richtung der Achse des aus der optischen Faser austretenden Laserstrahls im wesentlichen parallelen Achse (21), wobei der Schweißkopf derart ausgebildet ist, daß er mit der Innenöffnung des Rohrs zusammenwirkt, und enthält
Fokussiermittel (29) des aus der optischen Faser austretenden Strahls,
Ablenkmittel (37) des aus den Fokussiermitteln (29) austretenden Strahls zum Fokussieren des abgeleiteten Strahls auf den zu schweißenden Abschnitt der Hülse,
wobei diese Ablenkmittel (37) des Strahls einen ebenen Umlenkspiegel (37′) des Strahls in Richtung auf den genannten Abschnitt enthalten,
eine den Umlenkspiegel (37′) und den Brennpunkt (39) des Strahls trennende interne Zurücksetzungszone (42),
sowie Spülmittel (14) zum Spülen dieser Zurücksetzzone mit Hilfe eines Spülgases, die derart ausgebildet sind, daß sie die bei der Verschmelzung der Metalle bei ihrem Schweißen auftretenden Metalldämpfe von den Ablenkmitteln (37) vertreiben, dadurch gekennzeichnet, daß der Umlenkspiegel (37′) des Strahls vollständig gegenüber dem Brennpunkt (39) mit einem Abstand angeordnet ist,
der dem die Achse (21) des Schweißkopfs von dem Brennpunkt (39) trennenden Abstand d₀ im wesentlichen gleich oder größer ist, und
daß der Körper an seinem Ausgangsende (22, 89) vollständig offen ist und die Spülmittel derart ausgebildet sind, daß sie die Metalldämpfe in die Verlängerung des Schweißkopfs treiben.

2. Gerät zum Schweißen nach Anspruch 1, dadurch gekennzeichnet, daß der kleinste die Ablenkmittel (37) von dem Brennpunkt (39) trennende Abstand kleiner als 30 mm ist.

3. Gerät zum Schweißen nach Anspruch 1 oder 2, dadurch gekennzeichnet, daß das Ende der optischen Faser (28), aus der der Laserstrahl ausgetreten ist, in der Achse (21) des Schweißkopfs (9) festgelegt ist, und daß die Fokussiermittel (29) optische Ablenkmittel (32) für den Strahl gegenüber der Achse (21) des Schweißkopfs enthalten, um den Strahl auf den Umlenkspiegel (37′) zu leiten.

4. Gerät zum Schweißen nach Anspruch 3, dadurch gekennzeichnet, daß die Fokussiermittel (29) hintereinander auf dem optischen Weg des aus der Faser ausgetretenen Strahls einen Meniskus (30), eine plankonvexe Linse (31) und die optischen Ablenkmittel (32) für den Strahl aufweisen, wobei die optischen Ablenkmittel von einem Teil einer sphärischen plankonvexen Linse gebildet sind, den man durch eine zylindrische Bohrkerngewinnung der genannten sphärischen Linse erhalten hat, mit einer Achse parallel zu der Achse der genannten sphärischen Linse.

5. Gerät zum Schweißen nach einem der vorhergehenden Ansprüche, dadurch gekennzeichnet, daß die Gasspülmittel (14) Deflektoren (45) enthalten, die durch Wände gebildet sind, die symmetrisch zu einer Ebene angeordnet sind, die durch die Achse des Schweißkopfs geht, und die derart ausgebildet sind, daß sie die Geschwindigkeit des Gases in der Zurücksetzzone vergrößern und den dynamischen Druck erhöhen, der sich auf die Schweißzone ausübt.

6. Gerät zum Schweißen nach einem der vorhergehenden Ansprüche, dadurch gekennzeichnet, daß es darüber hinaus Mittel (17) zum Steuern und Kontrollieren der Laserschweißung in dessen Impulsabgabe während aufeinander folgender Abgabezeiten zwischen der Größenordnung von 10 Millisekunden und der Größenordnung von 50 Millisekunden aufweist.

7. Gerät zum Schweißen nach einem der Ansprüche 1 bis 6, dadurch gekennzeichnet, daß die verwendete Quelle des Laserstrahls eine Festkörperlaserquelle des Typs YAG-Laser ist.

8. Gerät zum Schweißen nach einem der vorhergehenden Ansprüche, dadurch gekennzeichnet, daß es darüber hinaus Mittel zum automatischen Rotieren des Schweißkopfs um seine Achse und Mittel zur automatischen Verlagerung des Schweißkopfs längs seiner Achse aufweist, die derart ausgebildet sind, daß sie den Kopf gegenüber den zu schweißenden Teilen in Längsrichtung verlagern.

9. Gerät zum Schweißen nach einem der vorhergehenden Ansprüche, dadurch gekennzeichnet, daß das Spülgas ein neutrales Gas ist.

10. Gerät zum Schweißen nach einem der vorhergehenden Ansprüche, dadurch gekennzeichnet, daß die Spülmittel Bypassmittel (43) enthalten, die zum Teil von ringförmigen Nuten gebildet sind, die in die Innenfläche des zylindrischen Körpers um die Fokussiermittel herum ausgespart sind.

11. Gerät nach einem der vorhergehenden Ansprüche, dadurch gekennzeichnet, daß es eine zweite optische Faser zur Steuerung der Leistung des Laserstrahls aufweist.

12. Gerät nach einem der vorhergehenden Ansprüche, dadurch gekennzeichnet, daß es eine Schutzumhüllung der optischen Faser zwischen der Laserstrahlungsquelle und dem Schweißkopf aufweist, wobei die Schutzumhüllung ebenfalls das Spülgas transportiert, das so gleichzeitig dazu dient, die optische Faser zu kühlen.

13. Gerät nach einem der vorhergehenden Ansprüche, dadurch gekennzeichnet, daß die Ablenkmittel derart ausgebildet sind, daß sie den fokussierten Strahl gegen die zu schweißenden Teile unter einem spitzen Auftreffwinkel mit der Tangentenebene an die zu schweißenden Teile auftreffen lassen, der kleiner als 30° ist.

14. Verfahren zum Schweißen einer rohrförmigen metallischen Hülse (41) im Innern eines Metallrohrs (2) mit einem Innendurchmesser von weniger als etwa 50 mm, bei dem gilt:
man führt die zu schweißende Hülse (41) in das Rohr (2), mit dem sie fugendicht zusammenwirkt, ein,
man führt einen Schweißkopf (9) mit um eine Achse (21) langgestreckter Form in das Rohr bis in eine gegenüber der zu schweißenden Hülse bestimmte Position des Kopfs ein,
man sendet einen Laserstrahl in ein mit dem Schweißkopf verbundenes optisches Fasersystem, indem man den aus der optischen Faser (10) ausgetretenen Laserstrahl auf den zu schweißenden Teil der Hülse mit Hilfe von starr an dem Kopf befestigten Ablenkmitteln (37) fokussiert, was die Verschweißung der Hülse mit dem Rohr durch Schmelzen des Metalls nach sich zieht,
man läßt den Schweißkopf (9) um seine Achse rotieren, um eine kreisförmige kontinuierliche oder diskontinuierliche Schweißung der Hülse (41) auf der Innenwand des Rohrs zu verwirklichen, und
man spült gleichzeitig mit der Emission des Laserstrahls die Schweißzone mit einem Spülgas, das in das Innere des Schweißkopfs injiziert und zwischen die Ablenkmittel (37) und die Schweißzone gerichtet wird, um die bei dem Schmelzen des Metalls entstandenen Metalldämpfe von den Ablenkmitteln wegzuführen,
dadurch gekennzeichnet, daß
die Laseremission pulsierend bewirkt wird und daß das Spülen sich in Richtung der Verlängerung des an seinem Ende offenen Schweißkopfs verwirklicht und daß man gleichzeitig das Innere des Rohrs durch dasjenige Ende des Rohrs absaugt, das dem Ende entgegengesetzt ist, durch das man den Schweißkopf eingeführt hat, um die Evakuierung des neutralen in das Innere des Kopfs injizierten Spülgases zu begünstigen.

## Claims

1. Apparatus for the laser beam welding of a metal tubular sleeve (41) inside a metal tube (2), the said apparatus containing:
- a fibre optic (10) for transmitting the beam
- and a welding head (9) comprising a cylindrical body (20) with an axis (21) approximately parallel to the direction of the axis of the laser beam originating from the fibre optic, said welding head being suitable for co-operating with the internal bore of said tube and containing
means of focusing (29) the beam originating from the fibre optic,
means for deflecting (37) the beam originating from the focusing means (29) in order to focus the deviated beam onto the portion of the sleeve to be welded,
the said means for deflecting (37) the beam containing a plane mirror (37′) for directing the beam towards the said portion,
an internal clearance zone (42) separating the directing mirror (37′) and the focusing point (39) of the beam,
and means for purging (14) using a purging gas this clearance zone being arranged so as to flush the metal vapours produced by the fusion of the metals during welding away from the field of the deflection means (37),
characterized in that the directing mirror (37′) for the beam is wholly situated, relative to the focusing point (39), at a distance which is approximately greater than or equal to the distance dₒ separating the axis (21) of the welding head from said focusing point (39), and
in that the body is entirely open at its terminal end (22,89), the means for purging being arranged so as to flush the said metal vapours into the welding head extension.

2. Welding apparatus according to claim 1, characterized in that the smallest distance separating the means for deflecting (37) from the focusing point (39) is less than 30 mm.

3. Welding apparatus according to any one of claims 1 and 2, characterized in that the end of the fibre optic (28) from which the laser beam originates is fixed in the axis (21) of the welding head (9), and in that the means for focusing (29) contain optical means (32) for deviating the beam relative to the axis (21) of the welding head, in order to direct said beam onto the transfer mirror (37′).

4. Welding apparatus according to claim 3, characterized in that the means for focusing (29) contain, arranged successively on the optical path of the beam originating from the fibre, a meniscal lens (30), a convex plane lens (31) and optical means (32) for deviating the beam, said optical deviating means being constituted by a portion of a spherical convexo-planar lens, obtained by a cylindrical section of said spherical lens, along an axis parallel to the axis of said spherical lens.

5. Welding apparatus according to any one of the preceding claims, characterized in that the means for purging (14) with a gas contains deflectors (45) constituted by walls arranged symmetrically relative to a plane passing through the axis of the welding head and arranged so as to accelerate the speed of the gas in the clearance zone and to increase the dynamic pressure which it exerts in the welding zone.

6. Welding apparatus according to any one of the preceding claims, characterized in that in addition it contains command and control means (17) for laser welding in pulsed emission mode with successive emission periods lasting between of the order of 10 milliseconds and of the order of 50 milliseconds.

7. Welding apparatus according to any one of claims 1 to 6, characterized in that the source of the laser beam used is a solid laser source of YAG laser type.

8. Welding apparatus according to any one of the preceding claims, characterized in that in addition it contains means for automatically rotating the welding head around its axis and means for the automatic displacement of said welding head along its axis, arranged so as longitudinally to displace said head relative to the items to be welded.

9. Welding apparatus according to any one of the preceding claims, characterized in that the purging gas is an inert gas.

10. Welding apparatus according to any one of the preceding claims, characterized in that the means for purging contains a by-pass means (43) constituted in part by circular grooves cut in the internal face of the cylindrical body around the focusing means.

11. Apparatus according to any one of the preceding claims, characterized in that it contains a second fibre optic for controlling the power of the laser beam.

12. Apparatus according to any one of the preceding claims, characterized in that contains a sleeve for protecting the fibre optic between the laser radiation source and the welding head, said sleeve also carrying the purging gas which also jointly serves to cool said fibre optic.

13. Welding apparatus according to any one of the preceding claims, characterized in that the means for deflection are arranged so as to direct the focused beam towards the items to be welded at an acute angle of incidence which is less than 30°, relative to the tangential plane of the items to be welded.

14. Welding process by laser beam of a tubular metal sleeve (41) inside a metal tube (2) with an internal diameter of less than of the order of 50 mm, in which:
- the sleeve (41) to be welded is introduced into the tube (2) with which it jointly co-operates,
- a welding head (9) of elongated shape around an axis (21) is introduced into the tube up to a determined position of the head relative to the sleeve to be welded,
- a beam of laser radiation is emitted in a fibre optic system connected to the welding head focusing the beam of laser irradiation originating from the fibre optic (10) onto the portion of the sleeve to be welded through deflection means (37) fixed rigidly to the head, which brings about the welding of the sleeve to the tube by fusion of the metal,
- the welding head (9) is turned around its axis in order to perform a continuous or discontinuous circular weld of the sleeve (41), on the internal wall of the tube, and
- simultaneously with the emission of the laser beam the welding zone is purged with a purging gas injected inside the welding head and directed between the deflection means (37) and said welding zone, so as to carry the metal vapours produced by said fusion of metal away from the field of the deflection means,
characterized in that:
the laser emission is carried out in pulsed mode,
and the purging is carried out in the direction of the extension of the welding head which is open at its end, the contents inside the tube are simultaneously evacuated to the outside via the end of the tube opposite the end through which the welding head was introduced, in order to favour the evacuation of inert purging gas injected inside said head.
